Europäisches Patentamt

(19) European Patent Office

Office européen des brevets

(11) Publication number: **0 202 070**
**A2**

---

(12) **EUROPEAN PATENT APPLICATION**

(21) Application number: **86303451.8**

(22) Date of filing: **07.05.86**

(51) Int. Cl.⁴: **G 06 F 3/00**

---

(30) Priority: **08.05.85 GB 8511624**

(43) Date of publication of application:
**20.11.86 Bulletin 86/47**

(84) Designated Contracting States:
**AT BE CH DE FR GB IT LI LU NL SE**

(71) Applicant: **EPR BUREAU LIMITED**
**21, Douglas Street**
**London SW1P 4PE(GB)**

(72) Inventor: **Reynolds, Anthony**
**54 Hermitage Road**
**London N4 1LY(GB)**

(74) Representative: **Carpmael, John William Maurice et al,**
**CARPMAELS & RANSFORD 43 Bloomsbury Square**
**London, WC1A 2RA(GB)**

---

(54) **Image scanning system for a computer.**

㊗ The present invention provides a scanning system, producing and storing a digital representation of an image, comprising:

a support, for the image to be scanned, and a carriage which are movable relative to one another in a longitudinal direction;

a probe, movable on the carriage in a direction transverse to said longitudinal direction, for producing a digital signal related to the density of the image;

a digital computer for producing digital control signals for controlling the relative movement of the support and the carriage and the movement of the probe on the carriage so that the probe can be scanned over the image; and

pulse generating means for generating a synchronisation pulse when the probe has moved a predetermined distance in the transverse direction for enabling digital image signals produced by the probe at each position during its scanning to be transmitted to the digital computer,

the digital computer being arranged to receive the digital image signals produced by the probe and the pulse from the generating means, and to correlate the pulse, the digital image signals and the digital control signals to produce a digital representation of the image for storage in the computer.

Croydon Printing Company Ltd.

- 1 -

## SCANNING SYSTEM

The present invention relates to a scanning system for producing and storing in a digital computer a digital representation of an image. In particular, but not exclusively, the system will be of use in "digitising" architectural and technical drawings.

In an article entitled "A shaded-picture scanning attachment for incremental plotters" by I.P. Paget and R.T. Wood, published in the Computer Journal, Vol. 24, No.3, 1981, there is disclosed a picture scanning attachment consisting of a high resolution optical reflective sensor, and associated amplification stages, in the form of a small probe which replaced the pen and penholder in an incremental plotter, and thus allows shaded pictures to be scanned for subsequent processing by a digital computer. The article shows the use of the attachment to scan, for instance, postage stamps and digitise the scan using a sixteen level grey scale.

The scanning attachment shown in the article has a number of disadvantages. For instance, the attachment must be manually calibrated for each different scanning speed. Also, the attachment cannot be used with a multiprocessing computer because the unpredictable delay in data transfer to such a computer means that there is not a fixed time-lapse between sending a signal to the attachment and beginning to receive data from the sensor. This makes it impossible for the computer to process correctly the digitised information.

Other publications which relate to the digitisation of images are:

Review of Scientific Instruments, 51, 7, July, 1980, 954-958, R.M. Lum et al., "Microcomputer-controlled digitizer and image analyser";

Instrument and Control Systems, 43, 10, October, 1980, 121-123, L.P. Dennis, "Digitization of graphical analog records";

EP-A-0 097 555 (Chevalet);

FR-A-2 344 076 (Messerschmitt); and

US-A-3 848 089 (Stewart).

In our copending European patent application No: 85300238.4 there is described a scanning system, for producing and storing a digital representation of an image, comprising:

a support, for the image to be scanned, and a carriage which are movable relative to one another in a longitudinal direction;

a probe, movable on the carriage in a direction transverse to said longitudinal direction, for producing a digital signal related to the density of the image;

a switch for producing a digital signal each time the probe reaches an end of its movement on the carriage; and

a digital computer for producing digital control signals for controlling the relative movement of the support and the carriage and the movement of the probe on the carriage so that the probe can be scanned over the image, and for receiving digital image signals produced by the probe at each position during its scanning and digital switch signals and correlating these signals with the digital control signals to produce a digital representation of the image for storage in the computer.

It is an object of the invention described in our copending application to provide a scanning system which at least in part overcomes the disadvantages of the scanning attachment described in the Paget and Wood article.

The present invention provides an improvement over the scanning system described in our above-mentioned European application.

According to the present invention there is provided a scanning system, for producing and storing a digital representation of an image, comprising:

a support, for the image to be scanned, and a carriage which are movable relative to one another in a longitudinal direction;

a probe, movable on the carriage in a direction transverse to said longitudinal direction, for producing a digital signal related to the density of the image;

a digital computer for producing digital control signals for controlling the relative movement of the support and the carriage and the movement of the probe on the carriage so that the probe can be scanned over the image; and

pulse generating means for generating a synchronisation pulse when the probe has moved a predetermined distance in the transverse direction for enabling digital image signals produced by the probe at each position during its scanning to be transmitted to the digital computer,

the digital computer being arranged to receive the digital image signals produced by the probe and the pulse from generating means, and to correlate the pulse, the digital image signals and the digital control signals to produce a digital representation of the image for storage in the computer.

It will be appreciated that, in the system of the present invention, the digital computer may operate 'passively' or 'actively'. When operating passively it will at all times be receptive to data signals from the probe and the computer will be controlled by the pulse generating means. The computer will in this case receive in a single data set both the probe signals and the synchronisation pulse.

When the computer is operating actively it will be unreceptive to data signals from the probe until it receives the synchronisation pulse from the pulse generating means, whereupon it will become receptive to data signals.

Preferably, the computer operates passively.

It will be appreciated that the support may be movable and the carriage fixed, as in a conventional drum-type plotter, or that the carriage may be movable over a fixed support, as in a conventional flat bed-type plotter.

Preferably, the relative movement of the support and the carriage and the movement of the probe on the carriage is incremental movement so that the probe can be incrementally scanned over the image. This may best be achieved by use of digitally controlled stepping motors for driving the carriage or support and the probe or carriage. However, it is also possible to use continuous scanning movement of the probe over the image.

Preferably, the probe is mounted in a probe holder which is movably mounted on the carriage.

The probe may comprise an optical reflective image sensor or sensors. However, it is preferred that the probe is a linear or area array of photosensitive elements contained within an integrated circuit with, if necessary, associated environmental conditioning, or alternatively a linear or area array of optical fibers with associated light source and photosensors. Such devices are well known in the art and need no further description.

Preferably the probe or probe holder has on it a rounded metal face for engagement with the image. This has the dual function of keeping the probe a fixed distance from the image and of eliminating static electricity charges on the image which can cause false data to be produced by the probe.

If desired two or more probes may be provided either on the same or on different carriages. The data from the probes may be sent to the computer by separate serial lines or may be sent in multiplexed form along a single serial line.

The probe may be arranged to give a digital signal or a group of signals, each signal having only two possible values, indicating no image density and some image density respectively .

Alternatively, each digital signal may have a number, for instance, sixteen, of possible values, indicating varying degrees of image density on a defined grey scale.

Preferably, the digital value of the image signal is displayed by a numeric indicator on the image support as a diagnostic aid.

The support for the image may be of any of those normally used in plotters, and may therefore comprise a flat plate, a large drum or a small roller.

The pulse generating means may be arranged to produce one pulse for each traverse of the probe across the image. However, preferably, the pulse generating means is arranged to produce a plurality of pulses, advantageously at regular intervals, for each traverse of the probe across the image.

Preferably, the pulse generating means is connected to a digital stepping motor for effecting transverse movement of the probe. Alternatively, the pulse generating means may be connected to the digital circuitry controlling or monitoring said stepping motor. The pulse generating means in these cases will count the pulses supplied to the stepping motor and emit a pulse when a predetermined number of pulses have been counted.

Alternatively, the pulse generating means comprises a stroboscopic disc or other means for detecting transverse movement of the probe which produce pulses on movement of the probe which are counted by the pulse generating means.

Advantageously, the pulse generating means is also responsive to longitudinal movement of the probe over the image, and may be arranged to produce only one or a plurality of regular pulses for each longitudinal movement of the pulse over the image.

Where the pulse generating means is connected to a transverse movement stepping motor or its controlling or monitoring circuitry, it is preferably also connected to a stepping motor for effecting longitudinal movement of the probe over the image or its associated controlling or monitoring circuitry.

Alternatively, the stroboscopic disc or other means for detecting transverse movement of the probe may also be arranged to detect longitudinal movement of the probe and provide appropriate pulses for counting to the pulse generating means.

It is envisaged that a scanning system of the present invention can readily be produced by suitably modifying a known computer system incorporating a plotter. This will already include the support, carriage and holder which will normally hold a pen for producing the image on a paper held on the support. The plotter is controlled by the computer to scan the pen over the support. It will then only be necessary to mount the probe on the holder instead of the pen and provide the pulse generating means and data lines to the computer.

In most available plotters, movement of the probe in both transverse and longitudinal directions is effected in small incremental steps controlled by suitable circuitry. It is therefore possible to put the present invention into practice by taking data from the mechanism or circuitry in order for the pulse generating means to produce a synchronisation pulse, for instance as set out above. The synchronisation pulse will be used by the pulse generating means or the computer to dictate the time at which the digital image signals produced by the probe are transferred to the computer. The system is therefore self-calibrating for any speed or distance of probe movement. Moreover, the introduction of unpredictable time delays does not prevent the computer from correctly correlating the data and assembling a digital representation of the image. Therefore the present system can be part of a multiprocessing computer system.

Once the digital representation of the image has been stored in the computer, it may be manipulated in conventional manner, for instance to carry out design studies or to adapt the image to a new set of conditions. In the preferred embodiment, the plotter is reconverted to enable it to plot the original or amended image. Alternatively, the system may include a separate plotter controlled by the computer.

In an exemplary embodiment of the invention, a Benson Electronics Model 1322 drum-type incremental plotter was modified to provide a system in accordance with the invention.

The pens from the plotter were removed and replaced by a Thomson-CSF charge-coupled device linear image sensor (TH 7801 or 7802) with associated environmental conditioning mounted on a purpose designed support. The sensor may be fitted with a rounded metal face for contacting the drawing to keep the sensor a fixed distance away therefrom and to prevent any build-up of static electricity on the drawing.

Alternatively, the pens are replaced by an array of six optical fibers leading to associated photosensors. The system is arranged so that the fibres in the probe will touch the image to be scanned. The probe will include a beam splitting apparatus whereby the return paths of the illuminating beams are diverted to the photosensors.

The plotter is provided with stepping motors and associated circuitry of conventional type for effecting transverse and longitudinal movement of the sensor. Data is taken from the circuitry and processed by a computer (see below) to generate a synchronisation pulse each time the probe has moved a distance of about 0.2mm in the transverse or longitudinal direction. The synchronisation pulses control the transfer of data from the sensor to the computer.

The operation of the plotter is controlled by a Prime 50 series digital computer to cause the holder, and therefore the probe, to carry out a raster scan of an image attached to the drum, for instance an architectural drawing, in known manner.

As indicated above, the computer also functions as the pulse generating means for controlling the transmission of data from the sensor to the computer.

The digital signals are transmitted to the computer by a serial link. The computer can then exactly correlate incoming data with the position of the probe on the image using the synchronisation pulses and can thus produce in known manner a correct digital representation of the image. The digital representation is then stored in the computer for future amendment and/or replotting.

A numeric indicator, for instance a Texas Instruments TIL 311 display, is provided on the scanner and displays thereon the instaneous digital value transmitted from the probe to the computer as a diagnostic aid for the user.

The software needed to program the computer to control the system may be readily designed by a skilled man or may be at least in part bought "off the shelf". It therefore needs no further description.

If desired, a second plotter, in unmodified form may be attached to the system in known manner.

CLAIMS ·

0202070

1.  A scanning system, for producing and storing a digital representation of an image, comprising:

a support, for the image to be scanned, and a carriage which are movable relative to one another in a longitudinal direction;

a probe, movable on the carriage in a direction transverse to said longitudinal direction, for producing a digital signal related to the density of the image;

a digital computer for producing digital control signals for controlling the relative movement of the support and the carriage and the movement of the probe on the carriage so that the probe can be scanned over the image; and

pulse generating means for generating a synchronisation pulse when the probe has moved a predetermined distance in the transverse direction for enabling digital image signals produced by the probe at each position during its scanning to be transmitted to the digital computer,

the digital computer being arranged to receive the digital image signals produced by the probe and the pulse from the generating means, and to correlate the pulse, the digital image signals and the digital control signals to produce a digital representation of the image for storage in the computer.

2.      The system of claim 1, wherein said digital computer is arranged to operate passively.

3.      The system of claim 1 or claim 2, wherein the support is moveable and the carriage is fixed.

4.      The system of claim 1 or claim 2, wherein the support is fixed and the carriage is movable.

5. The system of any one of claims 1 to 4, wherein the relative movement of the support and the carriage and the movement of the probe on the carriage are incremental.

6. The system of any one of claims 1 to 5, wherein the probe is mounted in a probe holder which is movably mounted on the carriage.

7. The system of any one of claims 1 to 6, wherein the pulse generating means is connected to a digital stepping motor for effecting transverse movement of the probe.

8. The system of claim 7, wherein the pulse generating means is also connected to a digital stepping motor for effecting longitudinal movement of the probe relative to the support.

9. The system of claim 8, wherein the pulse generating means comprises a part of the digital computer.

10. The system of claim 1, wherein the probe includes a beam splitting apparatus and is adapted to touch the image being scanned.